# EUROPÄISCHE PATENTSCHRIFT

(11) **EP 0 286 074 B1**
(45) Veröffentlichungstag und Bekanntmachung des Hinweises auf die Patenterteilung: **27.07.1994**
(21) Anmeldenummer: 88105513.1
(22) Anmeldetag: 07.04.1988
(51) Int. Cl.: C07F 7/12, C01B 33/107

(54) **Verfahren zur Herstellung von Disproportionierungsprodukten von Dichlormethylsilan in Gegenwart eines Katalysators**
Process for the preparation of products resulting from the disproportionation of dichloromethylsilan in presence of a catalyst
Procédé de préparation de produits de réarrangement de dichlorométhylsilane en présence d'un catalyseur

(30) Priorität: 10.04.1987 DE 3712098
(43) Veröffentlichungstag der Anmeldung: 12.10.1988
(73) Patentinhaber: WACKER-CHEMIE GMBH, D-81737 München (DE)
(72) Erfinder: Ottlinger, Ralph, Dr., D-8110 Murnau (DE); Rengstl, Alfred, Dr., D-8261 Reischach (DE); Jira, Reinhard, Dr., D-8263 Burghausen (DE)

(56) Entgegenhaltungen:
- EP-A- 0 138 669
- EP-A- 0 138 670
- US-A- 4 613 491

## Beschreibung

Die Disproportionierung von Dichlormethylsilan zu Chlormethylsilan und/oder Methylsilan, in Gegenwart eines Katalysators durch Austausch von Si-gebundenen Wasserstoff- und Chloratomen ist bekannt. Die Disproportionierung von Dichlormethylsilan zu Methylsilan erfolgt hierbei gegebenenfalls über Chlormethylsilan als isolierte Zwischenstufe.

In der US-A-4405590 wird die Disproportionierung mit Alphaoxaminogruppen enthaltenden Verbindungen als Disproportionierungskatalysatoren beschrieben, in der US-A-2834648 werden als Disproportionierungskatalysatoren sekundäre oder tertiäre Amine bzw. deren Salzen verwendet.

Bei den genannten Verfahren ist der Katalysator homogen im Reaktionsmedium verteilt. Die Reaktion findet also in homogener Phase statt, was eine leichte Abtrennbarkeit und Rückgewinnbarkeit der Katalysatoren verhindert.

In der US-A 4,613,491 wird gemäß Beispiel 5 ein Verfahren zur Herstellung von Disproportionierungsprodukten von Dichlorsilan in Anwesenheit eines Katalysators beschrieben, der kovalent auf einem Träger gebunden ist. Die Produktumsetzung bei diesem Verfahren entspricht dem chemischen Gleichgewicht, wodurch wegen der thermodynamischen Gegebenheiten nur ein geringer Umsatz von Edukt bzw. eine geringe Ausbeute an Produkt erzielt wird.

Aufgabe der Erfindung ist ein Verfahren zur Herstellung von Disproportionierungsprodukten von Dichlormethylsilan, bei dem das Abtrennen der Katalysatoren zur Verringerung der Fremdstoffanteile und die Rückgewinnbarkeit des Katalysators ohne zusätzlichen technologischen bzw. zeitlichen Aufwand möglich ist und gegebenfalls auch ein kontinuierlicher Betrieb installiert werden kann.

Gegenstand der Erfindung ist ein Verfahren zur Herstellung von Disproportionierungsprodukten von Dichlormethylsilan in Gegenwart eines Katalysators, das dadurch gekennzeichnet ist, daß Dichlormethylsilan mit einem Katalysator, bestehend aus einem im Reaktionsmedium unlöslichen Träger, auf dem NR₃-Gruppen oder ^{⊖}X^{⊕}NR₄-Gruppen, worin R gleiche oder verschiedene einwertige Alkyl-, Aryl-, alicyclische Gruppen gegebenenfalls mit Heteroatomen als Bestandteile des Ringes oder Wasserstoffrest und X^{⊖} Chlorid, Bromid oder Iodid bedeuten, kovalent gebunden sind, in Berührung gebracht wird, wobei der Katalysator als Formkörper in einer Rektifikationskolonne eingesetzt wird.

Vorzugsweise enthalten Alkylgruppen R jeweils 1-20 Kohlenstoffatome je Rest, wie der Methyl-, Ethyl-, n-Propyl-, Isopropyl-, n-Butyl-, sec.-Butyl-, Decyl-, Dodecyl-, Tetradecyl-Hexadecyl- und Octadecylrest. Beispiele für Arylgruppen R sind der Phenyl- und Toluylrest, für alicyclische Gruppen R die Reste -(CH₂)₅- und -(CH₂)₄- und für alicyclische Gruppen R mit einem Heteroatom als Bestandteil des Ringes der Rest -(CH₂)₂-O-(CH₂)₂-. Insbesondere wegen der leichten Zugänglichkeit sind als Alkylgruppe R der Methylrest und als Halogenidion X^{⊖} das Chloridion bevorzugt.

Bevorzugte im Reaktionsmedium unlösliche Träger bestehen aus Stoffen mit Hydroxylgruppen an der Oberfläche. Beispiele für solche Stoffe sind saure Tone wie z.B. Tonsil, Montmorillonit und sonstige Alumosilikate in der H⁺-Form, Zeolithe, poröses Glas wie z.B. Controlled Pore Glass oder poröse Keramik wie Controlled Pore Ceramics, poröses Siliciumdioxid, wie gefällte oder pyrogene Kieselsäure, poröses Aluminiumoxid und poröses Mullit.
Weitere Beispiele für bevorzugte im Reaktionsmedium unlösliche Träger sind getrocknete Hydrolysate von funktionellen Silanen oder Polystyrole wie z.B. mit Divinylbenzol vernetztes Polystyrol.

Insbesondere finden poröses Siliciumdioxid oder mit Divinylbenzol vernetztes Polystyrol als Träger Verwendung.

Die kovalente Bindung der NR₃-Gruppen oder ^{⊖}X ^{⊕}NR₄-Gruppen auf dem Träger erfolgt bei den Stoffen mit Hydroxylgruppen an der Oberfläche vorzugsweise durch Reaktion dieser Hydroxylgruppen mit den hydrolysierbaren Gruppen Y der Verbindungen der Formel

Y₃₋ₓR¹ₓSi(CH₂)ₙZ

worin Y eine hydrolysierbare Gruppe und R¹ eine Alkyl- oder Arylgruppe bedeuten, n innerhalb des Bereiches von 1-20 liegt, x für 0 oder 1 und Z für die Gruppen NR₂ und ^{⊖} X^{⊕}NR₃, wobei R die oben angegebene Bedeutung hat, stehen, in einem inerten Lösungsmittel bei Temperaturen im Bereich von 0-200°C.

Vorzugsweise sind hydrolysierbare Gruppen Y Alkoxyreste, wie der Methoxy- oder Ethoxyrest, oder Halogenatome wie das Chloratom, Alkylgruppen R¹ Gruppen mit 1-12 Kohlenstoffatomen wie der Methyl-, Ethyl-, n-Propyl-, iso-Propyl-, n-Butyl-, iso-Butylrest und Arylgruppen R¹ der Phenyl- oder Tolylrest. Insbesondere wegen der leichten Zugänglichkeit sind der Methylrest und n 2 oder 3, also der Ethylen- oder Propylenrest, bevorzugt.

Beispiele für bevorzugte Verbindungen der Formel

Y₃₋ₓR¹ₓSi(CH₂)ₙZ

sind 3-Aminopropyltrimethoxysilan, 3-Aminopropyltriethoxysilan, 2-Aminoethyltrimethoxysilan, 2-Aminoethyltriethoxysilan, 3-Aminopropyltrichlorsilan.

Insbesondere finden N,N-Diethylaminopropyltrimethoxysilan, Morpholinopropyltriethoxysilan, Trimethoxysilyl-3-propyl-N,N,N-dimethyloctylammoniumchlorid und Trimethoxysilyl-3-propyl-N,N,N-dimethyloctadecylammoniumchlorid Verwendung.

Vorzugsweise werden 5-30 Gew.-%, insbesondere 10-20 Gew.-% Verbindungen der Formel

Y₃₋ₓR¹ₓSi(CH₂)ₙZ

worin R¹, Y, Z, n und x die oben dafür gegebene Bedeutung haben, bezogen auf das Gewicht des unbehandelten Trägers, eingesetzt.

Die kovalente Bindung der NR₃-Gruppen oder ^{⊖}X ^{⊕}NR₄-Gruppen auf dem Träger erfolgt bei den getrockneten Hydrolysaten von funktionellen Silanen während der Herstellung der Hydrolysate, die nach bekannten Verfahren herstellbar sind, vergleiche K.G. Allum et al., J. Organomet. Chem. 87, 203 (1975). Zur Modifizierung der Hydrolysate kann die Hydrolyse auch in Gegenwart von weiteren Verbindungen wie Wasserglas, Titanhalogeniden oder Titanalkoholaten, Zirkonhalogeniden oder Zirkonalkoholaten, Aluminiumhalogeniden oder Aluminiumalkoholaten, Siliciumhalogeniden oder Siliciumalkoholaten, und Zinnhalogeniden oder Zinnalkoholaten durchgeführt werden.
Beispiele für diese Verbindungen sind
SiOEt₄ und (EtO)₃ SiCH₂CH₂CH₂NEt₂;
TiOBu₄ und (MeO)₃SiCH₂CH₂ CH₂NMe₂C₁₈H₃₇^{⊕}Cl^{⊖};
Na₂SiO₃ und (MeO)₃SiCH₂CH₂CH₂NMe₂C₁₀H₂₁^{⊕}Cl^{⊖};
Al(i-Pr)₃ und (MeO)₃SiCH₂CH₂CH₂NMe₃^{⊕}Cl^{⊖}.

Polystyrole wie z.B. mit Divinylbenzol vernetztes Polystyrol mit kovalent gebundenen NR₃-Gruppen oder ^{⊖}X^{⊕}NR₄-Gruppen sind als basische Ionenaustauscher bekannt und kommerziell erhältlich. Beispiele für bevorzugte basische Ionenaustauscher sind Amberlite IRA 93, Amberlyst A21 (beide Rohm und Haas GmbH, Frankfurt BRD), Lewatit 35A, Lewatit MP64, Lewatit MP65, Lewatit MP62 (alle Bayer AG, Leverkusen, BRD).

Vor oder nach der kovalenten Bindung der NR₃-Gruppen oder ^{⊖}X^{⊕}NR₄-Gruppen auf dem Träger werden diese in an sich bekannter Weise in Formkörper wie Ringe, Halbringe, Stäbchen, Kugeln oder Sättel überführt.

Das erfindungsgemäße Verfahren wird in heterogener Phase durchgeführt.

Bei der Reaktion in der heterogenen Phase, bestehend aus einem festen Katalysator und dem Edukt in der Gasphase, wird der Katalysator als Formkörper, in einer Rektifikationskolonne eingesetzt.

Bevorzugte Formkörper haben die Form von Ringen, Kugeln oder Würfeln.

Bei der Anordnung des Katalysators als Formkörper in einer Rektifikationskolonne wird Dichlormethylsilan bei einem Druck von vorzugsweise 5-100bar und einer Temperatur von vorzugsweise 25-250°C durch die Rektifikationskolonne geleitet. Je nach Dimensionierng der Kolonne und der Wahl der Druck- und Temperaturbedingungen erhält man am Kolonnenkopf Chlormethylsilan, Methylsilan oder ein Gemisch von Chlormethylsilan und Methylsilan.

Die Formkörper werden aus feinverteiltem Katalysator mit einer mittleren Korngrößenverteilung von 1µm-1mm geformt, gegebenenfalls unter Zugabe von organischen oder anorganischen Bindern oder unter vernetzender Hydrolyse. Die Formgebung kann mittels Verpressen bei erhöhter Temperatur oder mittels Sintern bei erhöhtem Druck, aber auch mittels eines Extruders und anschließendem Zerkleinern der Profile erfolgen.
Beispiele für organische oder anorganische Binder sind Epoxydharze, Wasserglas, organische Polymere wie Polyethylen, Polypropylen, Polystyrol, Polyvinylchlorid, Polyacrylat und Polyamid.

Zur Erhöhung der Porosität der geformten Katalysatoren wird den Massen vor der Formgebung vorzugsweise eine wasserlösliche Substanz wie Natriumchlorid oder Natriumsulfat zugesetzt, welche nach dem Formgebungsschritt herausgelöst wird und somit eine hochaktive Makroporosität ergibt.

Chlormethylsilan und Methylsilan werden beispielsweise bei der Herstellung von Organopolysiloxanen oder bei der Herstellung von Tetraalkylsilanen, die als Hydrauliköle z.B. in der Raumfahrt eingesetzt werden, verwendet.

### Beispiel 1

Mittels einer Dosierpumpe wurde ein Volumenstrom von 125g/h Dichlormethylsilan einem Verdampfer bei einem Druck von 1bar zugeführt. Der erzeugte Dampf trat von unten in ein auf 100°C beheiztes Reaktionsrohr von 50cm Länge und 2,5cm Durchmesser, in dem sich 95,2g getrockneter Ionenaustauscher Lewatit MP 35 A (Bayer AG, Leverkusen, BRD) befanden, ein. Das austretende Gasgemisch wurde kondensiert und ein Teil zur Analyse mit 1-Okten umgesetzt.
- Produktzusammensetzung:: 87,24 % Dichlormethyloctylsilan
12,36 % Dioctylmethylsilan
0,39 % Methyltrioctylsilan
Das kondensierte Gasgemisch wurde fraktionierend destilliert, wobei ein Gemisch bestehend aus 97 % Chlormethylsilan und 3 % Methylsilan erhalten wurden.
Dieses Gemisch wurde in einem weiteren Verfahrensschritt mit einer Rate von 80g/h verdampft und einem weiteren, auf 100°C beheiztem Reaktionsrohr mit den gleichen Abmessungen wie oben zugeleitet, in welchem sich 92,8g Ionenaustauscher MP 64 (Bayer AG, Leverkusen, BRD) befanden. Das erhaltene Reaktionsprodukt zeigte nach der Derivatisierung mit 1-Octen zur
- Analyse folgende Zusammensetzung:: 77,38 % Dioctylmethylsilan
13,57 % Methyltrioctylsilan
9,01 % Methyloctylsilan

### Beispiel 2

### Herstellung des Katalysators

### Methode A

Gemahlener und getrockneter Ionenaustauscher Lewatit MP 35 A (Bayer AG, Leverkusen, BRD) wurden mittels eines Epoxidharzes auf Glasraschigringe, 6mm Außendurchmesser und 6mm Länge, aufgebracht, indem diese in eine Lösung des bereits mit dem Härter versehenen Epoxidharzes gebracht wurden und das Lösungsmittel wieder abgedampft wurde. Die klebrigen Raschigringe wurden in einen großen Überschuß feinteiligen Ionenaustauscher gegeben, einige Male umgeschüttet und nach 24-stündiger Aushärtzeit von überschüssigem Ionenaustauscher abgesiebt.

### Methode B

Hochdisperse Kieselsäure in Kugelform vom Durchmesser 4-6mm, KC-Siliperl AF 125 (Kali-Chemie, Hannover, BRD), wurde mit einer Lösung von N,N-Diethylaminopropyltriethoxysilan in wasserfeuchtem Toluol mehrere Stunden erhitzt. Anschließend wurde vom Toluol abfiltriert und der nunmehr funktionalisierte Träger bei 100°C im Vakuum getrocknet.

### Disproportionierung von Dichlormethylsilan

In eine Versuchsanlage aus V4A-Stahl, welche in den wesentlichen Teilen aus einer regelbaren Dosierpumpe, einem Verdampfer, einer dreiteiligen Füllkörperkolonne mit 2,5m Gesamtlänge und 50mm Innendurchmeser, einem Kolonnenkopf mit Kühler, einer Destillationsblase mit 5l Inhalt sowie den notwendigen Produktauffangeinrichtungen und Vorrichtungen zur Entspannung und Entleerung des Sumpfes bestand, wurden aus einem Vorratsgefäß mittels einer Dosierpumpe 800g/h Dichlormethylsilan, das in einem Verdampfer bei einem Druck von 20bar kontinuierlich verdampft wurde, zugeführt. Das Gasgemisch wurde dem unteren Kolonnenteil, der mit Raschigringen, 6mm Außendurchmesser und 6mm Länge, gefüllt war, zugeführt und trat von dort in den zweiten Kolonnenteil, gefüllt mit gemäß Methode B funktionalisierten Katalysator, ein, wobei sich das entstehende Reaktionsgemisch gleichzeitig auftrennte. Das gebildete höhersiedende Methyltrichlorsilan floß nach unten und sammelte sich in einem Druckgefäß, aus dem es in einer Menge von 690g/h über eine Dosierpumpe entspannt und über einen Zwischentank auf einen Vorratsbehälter abgezogen wurde. Die Leichtsieder traten unter weiterer Reaktion nach oben in den 3. Kolonnenteil, der mit einem Katalysator gemäß Methode A gefüllt war. Das gebildete Dampfgemisch wurde am Kolonnenkopf mittels eines Kühlers kondensiert und verließ die Destillationsanlage über einen Zwischenbehälter. Nach weiterer Kühlung wurde das Produkt in Druckbehälter abgezogen. Man erhielt dadurch 105g/h eines Silangemisches, bestehend aus 94% Methylsilan, 5% Chlormethylsilan und 1% Dichlormethylsilan.

## Patentansprüche

1. Verfahren zur Herstellung von Disproportionierungsprodukten von Dichlormethylsilan in Gegenwart eines Katalysators, dadurch gekennzeichnet, daß Dichlormethylsilan mit einem Katalysator, bestehend aus einem im Reaktionsmedium unlöslichen Träger, auf dem NR₃-Gruppen oder ^{⊖}X^{⊕}NR₄-Gruppen, worin R gleiche oder verschiedene einwertige Alkyl-, Aryl-, alicyclische Gruppen gegebenenfalls mit Heteroatomen als Bestandteile des Ringes oder Wasserstoffrest und X^{⊖} Chlorid, Bromid oder Iodid bedeuten, kovalent gebunden sind, in Berührung gebracht wird, wobei der Katalysator als Formkörper in einer Rektifikationskolonne eingesetzt wird.

## Claims

1. Process for preparing disproportionation products of dichloromethylsilane in the presence of a catalyst, characterized in that dichloromethylsilane is brought into contact with a catalyst comprising a support which is insoluble in the reaction medium and to which NR₃ groups or ^{⊖}X^{⊕}NR₄ groups, in which R are identical or different univalent alkyl, aryl or alicyclic groups optionally containing heteroatoms as components of the ring, or hydrogen, and X^{⊖} is chloride, bromide or iodide, are covalently bound, with the catalyst being used as a shaped body in a rectification column.

## Revendications

1. Procédé pour la préparation de produits de réarrangement dichlorométhylsilane en présence d'un catalyseur, caractérisé en ce que l'on met en contact le dichlorométhylsilane avec un catalyseur, constitué d'un support insoluble dans le milieu réactionnel, sur lequel des groupes NR₃- ou ^{⊖}X^{⊕}NR₄, dans lesquels R représente des groupes, identiques ou différents, monofonctionnels, choisis parmi les groupes alkyle, aryle, alicycliques comportant éventuellement des hétéroatomes dans le cycle, ou l'hydrogène, et X^{⊖} représente le chlorure, le bromure ou l'iodure, sont fixés par des liaisons covalentes, le catalyseur étant introduit, sous la forme d'un corps mis en forme, dans une colonne de rectification.
